(19) **Europäisches Patentamt / European Patent Office / Office européen des brevets**

(11) **EP 3 226 004 B1**

(12) **EUROPÄISCHE PATENTSCHRIFT**

(45) Veröffentlichungstag und Bekanntmachung des Hinweises auf die Patenterteilung:
**02.10.2019  Patentblatt 2019/40**

(51) Int Cl.:
**G01N 35/10** *(2006.01)*  **G01F 23/292** *(2006.01)*

(21) Anmeldenummer: **16162952.2**

(22) Anmeldetag: **30.03.2016**

(54) **VERFAHREN ZUM BETREIBEN EINER DOSIERVORRICHTUNG**

METHOD FOR OPERATING A METERING DEVICE

PROCÉDÉ DESTINÉ AU FONCTIONNEMENT D'UN DISPOSITIF DE DOSAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**04.10.2017  Patentblatt 2017/40**

(73) Patentinhaber: **CTC Analytics AG**
**4222 Zwingen (CH)**

(72) Erfinder:
• **Lüthy, Lucas**
**8053 Zürich (CH)**
• **Lüthi, Beat**
**8032 Zürich (CH)**

(74) Vertreter: **Keller & Partner Patentanwälte AG**
**Eigerstrasse 2**
**Postfach**
**3000 Bern 14 (CH)**

(56) Entgegenhaltungen:
**EP-A1- 2 011 872    EP-A1- 2 875 912**
**WO-A2-01/65214    DE-B4-102007 003 040**
**US-A- 5 919 706**

## Beschreibung

## Technisches Gebiet

Die Erfindung betrifft ein Verfahren zum Betreiben einer Dosiervorrichtung sowie eine Dosiervorrichtung, mit welchem/welcher der Flüssigkeitsstand einer in einem Gefäss befindlichen Flüssigkeit und/oder der Stand einer Phasengrenze in dieser Flüssigkeit gemessen werden kann.

## Stand der Technik

In Laboreinrichtungen werden vermehrt automatisierte Systeme verwendet, mit denen bestimmte Volumina von Flüssigkeiten, Reagenzien oder Lösungsmitteln in Reaktionsgefässe zudosiert oder in Analysegeräte eingespritzt werden können. Derartige Dosiervorrichtungen verfügen in der Regel über Dosiereinheiten mit einer Kanüle, mit denen sich die Volumina entnehmen und anschliessend wieder abgeben lassen. Üblicherweise lassen sich die Dosiervorrichtungen in mindestens zwei Raumrichtungen, insbesondere in einer vertikalen (z-) Richtung sowie mindestens einer horizontalen (x-oder y-) Richtung motorisch verfahren, womit ein automatisches Arbeiten der Dosiervorrichtungen möglich ist.

Eine Schwierigkeit besteht jedoch darin, die Kanüle in der vertikalen Richtung soweit zu bewegen, dass diese in eine in einem Proben- oder Reagenzgefäss befindlichen Flüssigkeit eintaucht, jedoch nicht zu tief, da ansonsten die Wahrscheinlichkeit steigt, dass an der äusseren Wandung der Kanüle Flüssigkeit haften bleibt, welche anschliessend von der Kanüle abtropfen und so das dosierte Volumen verfälschen oder eine in einem anderen Gefäss befindliche Flüssigkeit verunreinigen könnte.

Zur Bestimmung des Füllstandes sind im Stand der Technik einige Lösungen bekannt. Beispielsweise kann anhand einer kapazitativen Messung an der Kanüle das Eintauchen der Kanüle in eine Flüssigkeit detektiert werden. Allerdings setzt dies voraus, dass die Flüssigkeit leitfähig ist, da ansonsten keine Messung erfolgen kann.

Auch ist eine Methode bekannt, bei welcher der Pegel einer Flüssigkeit mittels einer Elektrode erfasst wird, welche in die Flüssigkeit getaucht wird und der Flüssigkeitspegel einem leitenden Zustand der Elektrode entsprechend erfasst wird. Nach dem Eintauchen muss jedoch die Elektrode gewaschen werden, um eine Kreuzkontamination zu verhindern. Ebenso ist bekannt, zum Erfassen des Flüssigkeitspegels einen Drucksensor zu verwenden, der erkennt, ob Dampf oder Flüssigkeit angesaugt wird. Dieses Verfahren hat jedoch den Nachteil, dass die Auflösung des Drucksensors schwach und die Empfindlichkeit niedrig ist. Insbesondere ist das Verfahren anfällig von externen Einflussfaktoren, wie Umgebungstemperaturschwankungen und Vibrationen. Auch sind optische Verfahren bekannt, bei denen ein Lichtwellenleiter zum Abstrahlen von Licht als auch zum Aufnehmen von Licht ausserhalb der Düse vorgesehen sind, um das von einem Flüssigkeitspegel reflektierte Licht aufzufangen, und dadurch den Flüssigkeitspegel zu erfassen. Diese Lichtwellenleiter müssen aber parallel zusammen mit der Düse in den Behälter eingeführt werden, der die Flüssigkeit enthält, was die Gefahr einer Kreuzkontamination birgt.

Ferner sind auch folgende Systeme bekannt, welche auf optischen Systemen basieren: Beispielsweise offenbart die US 5,919,706 A (Hideji Tajima) ein Verfahren und eine Vorrichtung zum Ansaugen und Bestimmen einer Flüssigkeit, wobei eine Aufwärts- oder Abwärtsbewegung einer Düse zum Ansaugen einer Flüssigkeit wie einer Probe eines Blutserums oder eines Reagens, sowie eine Abpipettierung der Flüssigkeit in Gefässe jeweils genau gesteuert werden. Bei diesem Verfahren erfolgt die Messung des Flüssigkeitspegels aufgrund des von der zu vermessenden Flüssigkeitsoberfläche reflektierten Lichts, welches in einen Öffnungsabschnitt einer Einmalspitze eintritt und von einem lichtaufnehmenden Körper empfangen wird, der in der Düse angeordnet ist.

Die DE 10 2007 003 040 B4 (Stratec Biomedical Systems AG) offenbart eine Vorrichtung sowie ein Verfahren zur optischen Detektion eines Phasenübergangs zwischen wenigstens zwei Medien. Die Vorrichtung umfasst eine Nadel mit darin integrierter transparenter Leitung mit einem faseroptischen Sensor, der durch wenigstens einen Lichtleiter gebildet ist, dessen Messpunkt möglichst nahe an der Ansaug- / Abgabeöffnung der Nadel angeordnet ist. Aus den durch den faseroptischen Sensor erfassten Signalen, welche durch die Brechungsindices der in der Leitung befindlichen Fluiden beeinflusst werden, können Phasenübergänge detektiert werden. Über die Phasenübergänge lässt sich beispielsweise das angesaugte Volumen berechnen oder als Ersatz einer kapazitativen Messung zur Füllstandsbestimmung verwenden.

Die EP 1 756 587 B1 (bioMerieux Inc.) beschreibt eine Vorrichtung zum Ansaugen und Abgeben eines Flüssigkeitsvolumens mit einer optischen Detektionseinheit. Die Vorrichtung umfasst zwei Lichtleiter zur Abgabe sowie zum Empfang eines Lichtsignals, wobei das Lichtsignal in eine Pipettenspitze mit Licht leitendem Material eingekoppelt wird beziehungsweise von dieser empfangen wird. Die Pipettenspitze wird über einen Antrieb linear verschoben, wobei sich das empfangene Lichtsignal bei Kontakt der Pipettenspitze mit einer Flüssigkeitsoberfläche verändert, so dass eine Steuerung anhand der Position des Antriebs bei Kontakt der Pipettenspitze mit der Flüssigkeitsoberfläche deren Höhe bestimmen kann.

Die aus dem Stand der Technik bekannten Verfahren und Vorrichtungen haben den Nachteil, dass diese spezielle Kanülen oder Pipettenspitzen benötigen, was die Kosten für den Betrieb derartiger Vorrichtungen wesentlich erhöht. Ferner wird jeweils ein Teil der optischen Komponenten in die Flüssigkeit eingetaucht, was Probleme bei der Reinigung mit sich bringen kann.

## Darstellung der Erfindung

Aufgabe der Erfindung ist es, ein dem eingangs genannten technischen Gebiet zugehörendes Verfahren zu schaffen, welches den Betrieb einer Dosiervorrichtung mit einer Füllstandsbestimmung ermöglicht, welche einfach aufgebaut ist und welche ohne speziell ausgestaltete Kanülen oder Pipettenspitzen auskommt.

Die Lösung der Aufgabe ist durch die Merkmale des Anspruchs 1 definiert. Gemäss der Erfindung umfasst das Verfahren zum Betreiben einer Dosiervorrichtung mit einer Steuerungseinheit und einer Dosiereinheit, die eine Kanüle mit einem ersten Volumen und einer Spitze sowie einen mit der Kanüle fluidisch verbundenen Entnahmebehälter aufweist, in einem ersten Schritt ein lineares Bewegen der Dosiereinheit in einer ersten Richtung entlang einer Achse mit einer vorbestimmten Geschwindigkeit, so dass die Kanüle in ein Gefäss mit wenigstens einer Flüssigkeit hinein bewegt wird. Anschliessend wird konstant Fluid durch die Kanüle mittels einer Pumpvorrichtung mit einem vorbestimmten Volumenstrom angesaugt. Wenigstens ein optischer Sensor misst mindestens einen optischen Parameter des angesogenen Fluids, wobei der wenigstens eine Sensor zwischen der Kanüle und dem Entnahmebehälter angeordnet ist. Bei Detektion einer Veränderung des mindestens einen optischen Parameters wird eine erste Position der Dosiereinheit auf der Achse durch die Steuerungseinheit gespeichert sowie die Bewegung der Dosiereinheit unterbrochen. Anschliessend berechnet die Steuerungseinheit anhand der ersten Position, der vorbestimmten Geschwindigkeit, des ersten Volumens sowie des vorbestimmten Volumenstromes eine zweite Position der Dosiereinheit auf der Achse, an welcher die Spitze der Kanüle eine Phasengrenze durchstossen hat, insbesondere beim Eintauchen der Spitze in die Flüssigkeit.

Die Aufgabe wird ferner durch eine Dosiervorrichtung gemäss Anspruch 8 gelöst. Die Dosiervorrichtung umfasst eine Steuerungseinheit und eine Dosiereinheit. Die Dosiereinheit weist eine Kanüle mit einem ersten Volumen und einer Spitze sowie einen mit der Kanüle fluidisch verbundenen Entnahmebehälter auf. Ferner umfasst die Dosiervorrichtung einen Antrieb, mit welchem sich die Dosiereinheit linear entlang einer Achse bewegen lässt, und eine Pumpvorrichtung, mit welcher sich ein Fluid durch die Kanüle in den oder aus dem Entnahmebehälter fördern lässt. Zwischen der Kanüle und dem Entnahmebehälter ist ein optischer Sensor angebracht, welcher sich unmittelbar an die Kanüle anschliesst. Der optische Sensor ist zur Messung mindestens eines optischen Parameters eines durch die Kanüle angesogenen Fluids ausgelegt. Der mindestens eine optische Sensor ist derart zwischen der Kanüle und dem Entnahmebehälter angeordnet, dass der mindestens eine optische Sensor unmittelbar an der Kanüle anliegt, wodurch sich zwischen der Spitze der Kanüle und dem mindestens einen optischen Sensor lediglich das erste Volumen der Kanüle befindet. Die Steuerungseinheit ist derart ausgestaltet, dass diese anhand der ersten Position, der vorbestimmten Geschwindigkeit, des ersten Volumens sowie des vorbestimmten Volumenstromes die zweite Position berechnen kann, an welcher die Spitze der Kanüle eine Phasengrenze durchstossen hat. Durch das erfindungsgemässe Verfahren sowie der erfindungsgemässen Dosiervorrichtung kann eine Bestimmung des Füllstandes einer Flüssigkeit in einem Probenbehälter durchgeführt werden, ohne dass spezielle Kanülen verwendet werden müssen. Ganz im Gegenteil können beliebige Kanülen verwendet werden, von denen lediglich das Volumen bekannt sein muss. Anhand dieses Volumens, der vorbestimmten Geschwindigkeit sowie des vorbestimmten Volumenstromes kann die Steuerungseinheit anschliessend berechnen, an welcher Position der Dosiereinheit entlang der Achse die Spitze der Kanüle in die Flüssigkeit eingetaucht ist. Ferner bietet das erfindungsgemässe Verfahren auch den Vorteil, dass kein Bestandteil des zur Bestimmung des Füllstandes nötigen Sensors in die Flüssigkeit eingetaucht wird, womit keine Reinigung desselben nötig ist.

Die Kanüle weist vorzugsweise einen zylindrischen Hohlraum auf, durch welchen ein Fluid aufgesogen oder ausgestossen werden kann. Weiter bevorzugt besteht die Kanüle bevorzugt aus einem Metall, insbesondere Stahl. Durch die Verwendung einer metallischen Kanüle kann sichergestellt werden, dass sich keine Volumenänderungen durch Verformungen ergeben. Die Spitze der Kanüle ist vorzugsweise stumpf ausgebildet. Alternativ kann die Spitze der Kanüle auch einen schrägen Schliff aufweisen, beispielsweise um einfacher in ein Septum, welches beispielsweise ein Gefäss verschliesst, durchstechen zu können. Je nach Einsatzzweck können Kanülen mit unterschiedlichen Aussendurchmessern, unterschiedlichen Längen und/oder variierenden Volumina eingesetzt werden. Die Steuerungseinheit verfügt vorzugsweise über Eingabemittel, mit denen sich das Volumen der eingesetzten Kanüle einstellen lässt. Alternativ kann die Dosiervorrichtung auch über Mittel verfügen, mit denen das Volumen der eingesetzten Kanüle automatisch erkannt wird, beispielsweise durch Auslesen von Daten, welche auf der Kanüle aufgebracht oder in dieser gespeichert sind. Alternativ kann die Dosiereinheit jedoch auch derart ausgestaltet sein, dass diese nur mit Kanülen, welche ein bestimmtes Volumen aufweisen, eingesetzt werden kann.

Der Entnahmebehälter ist vorzugsweise als Zylinder einer Spritze ausgebildet. Weiter bevorzugt kann der Entnahmebehälter jedoch auch als Probenloop ausgestaltet sein, welcher zwischen der Kanüle und der Spritze angeordnet ist. Durch die Verwendung eines Probenloops als Entnahmebehälter kann ein grösseres Volumen der Probenflüssigkeit entnommen werden. Ausserdem kann dadurch verhindert werden, dass die Pumpvorrichtung in Kontakt mit der Probenflüssigkeit kommt, was die Reinigung der Dosiereinheit wesentlich vereinfacht, da nur der Probenloop und die Kanüle gespült werden müssen. Der Entnahmebehälter kann entweder direkt oder über eine Leitung, beispielsweise einem Röhrchen, mit der Kanüle fluidisch verbunden sein. In diesem Fall ist der optische Sensor zwischen der Kanüle und der Leitung angeordnet.

Im Rahmen der vorliegenden Anmeldung wird unter dem Begriff "fluidisch verbunden" verstanden, dass zwei Elemente entweder direkt miteinander oder über ein Zwischenstück, wie einer Leitung, derart verbunden sind, dass eine Weiterleitung eines Fluids zwischen diesen Elementen im Wesentlichen verlustfrei möglich ist.

Zum Bewegen der Dosiereinheit verfügt die Dosiervorrichtung vorzugsweise über einen elektrischen Motor. Insbesondere bevorzugt wird als Motor ein Servomotor oder ein Schrittmotor eingesetzt. Dies erlaubt einen möglichst präzisen Antrieb der Dosiereinheit, wobei zusätzlich auch Rückschlüsse über die Position der Dosiereinheit entlang der Achse anhand des Motors möglich sind. Ferner verfügt die Dosiervorrichtung vorzugsweise über Mittel, mit denen sich die Drehbewegung des elektrischen Motors in eine lineare Bewegung umsetzten lässt. Dies kann beispielsweise über eine Spindel oder einen Zahnriemen realisiert werden.

Die Dosiereinheit ist vorzugsweise über mindestens eine lineare Führung entlang der Achse bewegbar. Die mindestens eine lineare Führung kann beispielsweise als Gestänge, Führungsnut oder Spindel ausgestaltet sein, mit welcher die Dosiereinheit im Eingriff steht.

Die Achse ist insbesondere derart ausgerichtet, dass diese bei der bestimmungsgemässen Verwendung der Dosiervorrichtung, bei der diese auf dem Boden steht, in vertikaler (z-) Richtung ausgerichtet ist. Bei einer vertikalen Anordnung des Gefässes entspricht demnach die Ausrichtung der Achse der Längsachse des Gefässes.

Als Flüssigkeit kommen grundsätzlich alle Flüssigkeiten, welche in einem Labor dosiert werden müssen, in Frage. Insbesondere bevorzugt handelt es sich bei den Flüssigkeiten jedoch um Probeflüssigkeiten, welche in ein Analysegerät, wie beispielsweise einem Spektrometer, eingespritzt werden sollen oder aber um Reagenzien, welche anschliessend einer Probenflüssigkeit oder einem Reaktionsgemisch zugegeben werden sollen.

Die Steuerungseinheit verfügt vorzugsweise über einen Mikrocontroller oder einen Chip, welcher in der Lage ist, die einzelnen Komponenten der Dosiervorrichtung zu steuern sowie Berechnungen auszuführen. Die Steuerungseinheit verfügt ferner bevorzugt über einen Speicher.

Die erste Geschwindigkeit kann vorzugsweise durch einen Benutzer über die Steuerungseinheit vorgeben werden. Hierzu verfügt die Steuerungseinheit über entsprechende Eingabemittel, wie beispielsweise eine Tastatur oder ein Touchscreen-Bildschirm. Alternativ kann die erste Geschwindigkeit auch fix durch den Hersteller vorgegeben sein.

Die Steuerungseinheit sowie der elektrische Motor verfügen bevorzugt über Mittel, mit denen sich das Einhalten der vorbestimmten ersten Geschwindigkeit überwachen und gegebenenfalls nachregeln lässt. Beispielsweise kann die Drehgeschwindigkeit einer Welle des elektrischen Motors über einen Encoder oder dergleichen überwacht werden. Der Steuerungseinheit muss dabei lediglich bekannt sein, in welchem Verhältnis die Drehgeschwindigkeit des elektrischen Motors zur linearen Geschwindigkeit der Dosiereinheit entlang der Achse steht, um die Drehgeschwindigkeit des elektrischen Motors auf einen entsprechenden Wert einzustellen.

Die Dosiervorrichtung verfügt ferner über eine Pumpvorrichtung. Alternativ kann die Dosiervorrichtung an eine externe Pumpvorrichtung angeschlossen werden. Vorzugsweise wird die Pumpvorrichtung durch die Steuerungseinheit gesteuert, so dass die Steuerungseinheit das Einhalten des vorbestimmten Volumenstroms durch die Pumpvorrichtung überwachen kann. Vorzugsweise lässt sich der vorbestimmte Volumenstrom durch einen Benutzer über die Steuerungseinheit verändern.

Einem Fachmann sind diverse Pumpvorrichtungen bekannt, mit denen sich ein konstanter Volumenstrom erzielen lässt. Vorzugsweise wird als Pumpvorrichtung ein Kolben verwendet, welcher innerhalb eines Zylinders, der beispielsweis als Entnahmebehälter dient, verschiebbar gelagert ist. Zum Verschieben des Kolbens ist ferner bevorzugt eine motorisch angetriebene Betätigungsvorrichtung vorgesehen.

In einer bevorzugten Ausführungsform ist die Dosiereinheit lösbar mit der Dosiervorrichtung verbunden. Dies bietet den Vorteil, dass je nach Verwendungszweck der Dosiervorrichtung eine geeignete Dosiereinheit verwendet werden kann. Ferner lässt sich nach einer bestimmten Gebrauchszeit oder einer gewissen Anzahl an Dosiervorgängen die Dosiereinheit leicht gegen eine neue Dosiereinheit austauschen, um eine konstante Qualität und gleichbleibende Präzision der Dosiervorgänge zu gewährleisten. Insbesondere bevorzugt verfügt die Steuerungseinheit über Eingabemittel, mit denen ein Benutzer den Austausch der Dosiereinheit sowie gegebenenfalls die Auswahl oder die Eingabe von Parametern der Dosiereinheit ermöglicht. Alternativ kann die Dosiervorrichtung auch über Mittel verfügen, mit denen das Auswechseln der Dosiereinheit detektiert sowie Parameter der neu eingesetzten Dosiereinheit automatisch erkannt werden, beispielsweise durch automatisches Einlesen oder Erkennen von auf der Dosiereinheit befindlichen Markierungen oder Daten.

Besonders vorteilhaft ist die Ausgestaltung der Dosiervorrichtung zur Aufnahme von Spritzen als Dosiereinheit. Hierzu ist lediglich eine Halterung für den Zylinder der Spritze sowie eine linear verschiebbare Halterung für den Kolben vorzusehen. Eine derartige Dosiervorrichtung wird beispielsweise in der EP 2 261 676 B1 (CTC Analytics) offenbart.

Der mindestens eine optische Sensor ist vorzugsweise derart zwischen der Kanüle und dem Entnahmebehälter angeordnet, dass dieser unmittelbar an die Kanüle anliegt, das heisst, so dass zwischen dem Hohlraum der Kanüle und dem Sensor kein Totvolumen vorhanden ist. Dadurch befindet sich zwischen der Spitze der Kanüle und dem Sensor lediglich das erste Volumen der Kanüle.

Vorzugsweise wird ein optischer Sensor verwendet. Alternativ können auch mehrere optische Sensoren, welche wahlweise denselben optischen Parameter oder alternativ unterschiedliche optische Parameter messen, eingesetzt werden.

Mit dem mindestens einen optischen Sensor lässt sich vorzugsweise die Veränderung eines durch eine Lichtquelle emittierten Lichtstrahls durch das Fluid messen. Als Lichtquelle kann beispielsweise eine Leuchtdiode oder eine Laserquelle eingesetzt werden. Vorzugsweise wird als Lichtquelle eine Infrarotleuchtdiode eingesetzt, das heisst, dass mindestens ein optischer Parameter von Infrarotlicht durch den wenigstens einen optischen Sensor gemessen wird. Der mindestens eine optische Sensor umfasst daher eine Lichtquelle sowie einen Lichtempfänger, welche vorzugsweise mit der Steuerungseinheit elektrisch verbunden sind.

Vorzugsweise ist der mindestens eine optische Sensor in einem Sensorgehäuse angeordnet, welches über Kopplungsvorrichtungen lösbar mit der Kanüle sowie dem Probenbehälter oder einer zum Probenbehälter führenden Leitung verbindbar ist.

Die Kopplungsvorrichtungen sind vorzugsweise Kopplungen des Luer-Systems. Dadurch lässt sich das Gehäuse und somit der Sensor einfach und schnell an eine Spritze sowie einer Standardkanüle befestigen. Alternativ können die Kopplungen jedoch auch beispielsweise über Gewinde oder einen Schliff verfügen, mit welchen sich fluiddichte Verbindungen erzielen lassen.

Durch die Messung des mindestens einen optischen Parameters können insbesondere Phasengrenzen des durch die Kanüle in Richtung des Aufnahmebehälters angesogenen Fluids detektiert werden. Zur Bestimmung eines Füllstandes des Gefässes wird insbesondere ein Phasenübergang von Gas, insbesondere Luft zu Flüssigkeit, detektiert. Allerdings lassen sich dadurch auch Phasengrenzen von zwei Flüssigkeiten detektieren, beispielsweise eine Phasengrenze zwischen einer hydrophilen und einer hydrophoben Flüssigkeit. Der gemessene optische Parameter ist daher vorzugsweise ein Parameter, der eine Phasengrenze zuverlässig anzuzeigen vermag.

Wenn eine Phasengrenze im Fluid den mindestens einen optischen Sensor durchläuft, wird sich der mindestens eine gemessene optische Parameter verändern. In diesem Fall wird die Bewegung der Dosiereinheit entlang der Achse unterbrochen und die Position der Dosiereinheit auf der Achse wird als erste Position durch die Steuerungseinheit gespeichert.

Der mindestens eine Sensor befindet sich zwischen der Kanüle und dem Entnahmebehälter, das heisst, dass der Sensor auf dem der Spitze der Kanüle entgegengesetzten Ende der Kanüle angeordnet ist. Das Durchbrechen einer Phasengrenze durch die Spitze der Kanüle wird demnach durch den Sensor zeitverzögert detektiert. Diese Zeit t entspricht dem zwischen der Spitze der Kanüle und dem Sensor befindlichen Volumens des Fluids $V_F$ geteilt durch den vorbestimmten Volumenstrom S:

$$t = \frac{V_F}{S}$$

Da sich die Dosiereinheit mit einer konstanten vorbestimmten Geschwindigkeit v entlang der Achse bewegt, kann die innerhalb der Zeit t zurückgelegte Strecke x berechnet werden:

$$x = t * v$$

Aus der gespeicherten ersten Position sowie der zurückgelegten Strecke x kann die Steuerungseinheit daher berechnen, an welcher Position sich die Dosiereinheit an dem Zeitpunkt befunden hat, an welchem die Spitze der Kanüle die Phasengrenze durchbrochen hat. Diese Position wird als zweite Position durch die Steuerungseinheit gespeichert.

Vorzugsweise sind die Kanüle sowie der Probenentnahmebehälter bei Nichtgebrauch mit einer Spülflüssigkeit gefüllt. Vor der linearen Bewegung wird bevorzugt ein vordefiniertes Volumen an Luft in die Kanüle eingesogen, so dass sich selbst bei einem hohen Füllstand der Flüssigkeit keine Vermischung zwischen der Spülflüssigkeit und der Flüssigkeit ergeben kann. Nach abgeschlossenem Verfahren werden Kanüle und Probenentnahmegefäss mit der Spülflüssigkeit gereinigt und anschliessend mit dieser gefüllt.

Bevorzugt wählt ein Benutzer an der Steuerungseinheit die Art des Gefässes aus einer Liste aus oder gibt Parameter des Gefässes, insbesondere Volumen, Form und/oder Durchmesser ein. Dadurch erhält die Steuerungseinheit Informationen über das eingesetzte Gefäss, welche zur Steuerung der Dosiervorrichtung relevant sind.

Vorzugsweise misst der wenigstens eine Sensor den Brechungsindex, die Trübung und/oder die Transmission von Lichtstrahlen mindestens einer vorbestimmten Wellenlänge im Fluid, insbesondere von Lichtstrahlen im Infrarotbereich.

Bevorzugt wird vor dem Bewegen der Dosiereinheit das Gefäss in eine Halterung der Dosiervorrichtung eingelegt, welche derart angeordnet ist, dass ein oberer Rand des Gefässes an einer definierten Grundposition relativ zur Achse zu liegen kommt. Die Steuerungseinheit berechnet das im Gefäss befindliche Volumen an Flüssigkeit anhand der zweiten Position sowie des Typs oder der Parameter des Gefässes.

Insbesondere verfügt die Dosiervorrichtung über ein Rack mit einer Vielzahl an Halterungen, welche das Anordnen von Gefässen eines bestimmten Typs derart ermöglicht, dass der obere Rand der Gefässe alle in derselben Ebene liegen.

Durch die Auswahl des Typs eines Gefässes oder Eingabe der Parameter kann die Steuerungseinheit ausgehend von der zweiten Position den absoluten Füllstand der Flüssigkeit im Gefäss berechnen. Insbesondere benutzt die Steuerungseinheit Eichkurven, bei denen eine Korrelation zwischen zweiter Position und Füllstand hinterlegt sind. Alternativ kann auch anhand der Form des Gefässes sowie seiner Höhe und seines Durchmessers eine Eichkurve durch die Steuerungseinheit berechnet werden. Da hierzu eine Vielzahl an Parametern eingegeben werden müssen, beispielsweise Form des Gefässes, Form der Gefässspitze, Höhe des Gefässes, Höhe der Gefässspitze, etc ist bevorzugt vorgesehen, dass ein Benutzer aus einer Liste an mit der Dosiervorrichtung einsetzbaren Gefässen auswählen kann, deren Eichkurven bereits im Speicher der Steuerungseinheit hinterlegt sind.

Mögliche Gefässe sind beispielsweise Mikroreaktionsgefässe, Präparategläser und/oder Zentrifugenröhrchen mit diversen Fassungsvermögen, zum Beispiel 15ml oder 50ml für Zentrifugenröhrchen.

Vorzugsweise wird die Dosiereinheit anschliessend entlang der Achse in die erste Richtung weiter mit der vorbestimmten Geschwindigkeit bewegt, bis der Sensor erneut eine Veränderung des mindestens einen optischen Parameters detektiert. Dabei wird die Bewegung unterbrochen und eine dritte Position der Dosiereinheit auf der Achse gespeichert. Die Steuerungseinheit berechnet anhand der dritten Position, der vorbestimmten Geschwindigkeit, des ersten Volumens sowie des vorbestimmten Volumenstromes eine vierte Position entlang der Achse, an welcher die Spitze der Kanüle eine zweite Phasengrenze innerhalb der Flüssigkeit durchstossen hat.

Dadurch lässt sich das erfindungsgemässe Verfahren beispielsweise zur Bestimmung des Füllstandes in einem Gefäss mit zwei Flüssigkeitsphasen einsetzten, wobei gleichzeitig auch der Flüssigkeitsstand der zweiten Phase bestimmt werden kann.

Wie ein Fachmann erkennen wird, kann bei einer allfälligen dreiphasigen Flüssigkeit die Dosiereinheit anschliessend weiter bewegt werden, um den Flüssigkeitsstand der dritten Phase zu messen.

Vorzugsweise wird die Dosiereinheit in eine zweite Richtung, welche der ersten Richtung entgegengesetzt ist, zurück bewegt, bis diese entlang der Achse an einer Position liegt, welche entlang der Achse um eine vordefinierte Distanz weiter in erster Richtung liegt als die zweite Position oder die vierte Position, wobei anschliessend die Pumpvorrichtung mit einem vorbestimmten Volumenstrom Fluid durch die Kanüle ansaugt und die Dosiereinheit mit einer zweiten Geschwindigkeit in die erste Richtung bewegt wird, welche durch die Steuerungseinheit anhand des vorbestimmten Volumenstromes und der Art des Gefässes oder der eingegebenen Parameter derart berechnet wird, dass die Spitze der Kanüle konstant um die vordefinierte Distanz in die erste Richtung unterhalb der ersten beziehungswiese der zweiten Phasengrenze bleibt.

Dadurch wird es möglich, Flüssigkeit aus der ersten oder der zweiten Phase zu entnehmen, wobei die Spitze der Kanüle nur knapp unterhalb der Phasengrenze, insbesondere unterhalb der Grenze zwischen Luft und Flüssigkeit, bleibt. Dadurch kann beispielsweise verhindert werden, dass nach einer Zentrifugation am Boden des Gefässes befindliches Sediment aufgewühlt und angesogen wird, da die Kanüle nur soweit in das Gefäss hinein bewegt wird, dass die Spitze knapp in die Flüssigkeit eintaucht.

Vorzugsweise umfasst das erfindungsgemässe Verfahren die Bewegung der Dosiereinheit entlang der Achse in eine zweite Richtung, welche der ersten Richtung entgegengesetzt ist, um die Kanüle aus dem Gefäss zu entfernen. Anschliessend wird die in der Kanüle sowie dem Gefäss befindlichen Flüssigkeit in ein Ausgussgefäss ausgestossen, wobei vorzugsweise das Gefäss sowie die Kanüle zusätzlich mit einer Spülflüssigkeit gespült werden. Danach wird die Dosiereinheit in die erste Richtung bewegt, bis diese an einer Position liegt, welche entlang der Achse um eine vordefinierte Distanz weiter in erster Richtung liegt als die zweite Position. Anschliessend saugt die Pumpvorrichtung mit einem vorbestimmten Volumenstrom Fluid durch die Kanüle, wobei die Dosiereinheit mit einer zweiten Geschwindigkeit in die erste Richtung bewegt wird, welche durch die Steuerungseinheit anhand des vorbestimmten Volumenstromes und der Art des Gefässes oder der eingegebenen Parameter derart berechnet wird, dass die Spitze der Kanüle konstant um die vordefinierte Distanz in die erste Richtung unterhalb der ersten Phasengrenze liegt. Das Verfahren wird unterbrochen, wenn die Dosiereinheit eine Position erreicht, welche entlang der Achse um eine zweite vorbestimmte Distanz in der zweiten Richtung von der vierten Position entfernt liegt.

Dies ermöglicht eine möglichst vollständige Entnahme der Flüssigkeit in der ersten Phase, ohne das Risiko, dass dabei auch Flüssigkeit der zweiten Phase entnommen wird, was zu einer Verunreinigung führen würde.

Aus der nachfolgenden Detailbeschreibung und der Gesamtheit der Patentansprüche ergeben sich weitere vorteilhafte Ausführungsformen und Merkmalskombinationen der Erfindung.

**Kurze Beschreibung der Zeichnungen**

Die zur Erläuterung des Ausführungsbeispiels verwendeten Zeichnungen zeigen:

Fig. 1      eine Ausführungsform einer erfindungsgemässen Dosiervorrichtung in einem ersten Verfahrensschritt in einer schematischen Darstellung;

Fig. 2 die Dosiervorrichtung aus der Fig. 1 in einem weiteren Verfahrensschritt;

Fig. 3 die Dosiervorrichtung aus der Fig. 1 an dem Zeitpunkt im Verfahren, an welchem der optische Sensor eine Phasengrenze detektiert.

Grundsätzlich sind in den Figuren gleiche Teile mit gleichen Bezugszeichen versehen.

**Wege zur Ausführung der Erfindung**

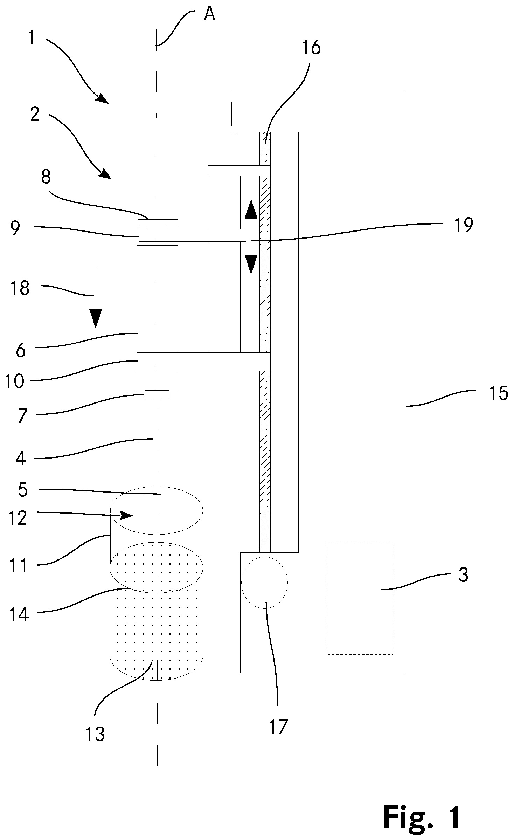

Die Fig. 1 zeigt eine Ausführungsform einer erfindungsgemässen Dosiervorrichtung 1. Unterschiedliche Schritte des erfindungsgemässen Verfahrens werden anhand der Dosiervorrichtung 1 in den Figs. 1 bis 3 gezeigt.

Die Dosiervorrichtung 1 verfügt über eine Dosiereinheit 2. Die Dosiereinheit 2 ist in der gezeigten Ausführungsform als Spritze ausgebildet, welche eine Kanüle 4 umfasst. Die Kanüle 4 hat eine Spitze 5, welche zur Aufnahme beziehungsweise Abgabe von Flüssigkeit in ein Gefäss 11 eingeführt werden kann. Ferner verfügt die Dosiereinheit 2 über einen Entnahmebehälter 6, welcher bei der gezeigten Ausführungsform als Zylinder der Spritze ausgebildet ist. Als Pumpvorrichtung 9 verfügt die Dosiervorrichtung 1 in der gezeigten Ausführungsform über einen motorisch linear verschiebbaren Aktuator 8, mit welchem ein Kolben 9 innerhalb des als Entnahmebehälter 6 fungierenden Zylinders der Spritze in zwei Richtungen 19 bewegt werden kann. In der gezeigten Ausführungsform ist die Spritze in einer Halterung 10 der Dosiervorrichtung 1 befestigt

Die Dosiervorrichtung 1 umfasst weiter eine Steuerungseinheit 3, welche in den Figuren lediglich angedeutet ist. Die Steuerungseinheit 3 ist in einem Gehäuse 15 der Dosiervorrichtung 1 angeordnet. Ferner verfügt die Dosiervorrichtung über einen Antrieb, mit welchem sich die Dosiereinheit 2 entlang einer Achse A bewegen lässt. Der Antrieb ist bei der gezeigten Ausführungsform Spindel 16, welche durch einen elektrischen Motor 17 in eine Drehbewegung versetzt werden kann. Ein auf der Spindel angeordnetes Gewinde greift in ein entsprechendes Gewinde der Halterung 10 ein, wodurch sich die Halterung 10 - und mit dieser die Dosiereinheit 2 - bei Drehung der Spindel 16 je nach Drehrichtung derselben in eine erste Richtung 18 oder einer dieser entgegengesetzten Richtung entlang der Achse A bewegen lässt.

Zwischen der Kanüle 4 und dem Entnahmebehälter 6 ist ein optischer Sensor 7 angeordnet, mit welchem mindestens ein optischer Parameter eines durch die Kanüle 4 in den Aufnahmebehälter 6 oder umgekehrt strömenden Fluids gemessen werden kann. Der optische Sensor 7 ist mit der Steuerungseinheit verbunden und überträgt Daten zu dieser.

Die Fig. 1 zeigt gleichzeitig einen ersten Schritt des erfindungsgemässen Verfahrens. In diesem wird die Dosiereinheit 2 durch den Antrieb mit einer ersten vorbestimmten Geschwindigkeit in der ersten Richtung 18 entlang der Achse A bewegt, um die Spitze 5 der Kanüle 4 in das Gefäss 11 zu bewegen. Das Gefäss 11 weist eine Öffnung 12 auf, in welche die Kanüle 4 eingeführt werden kann. Die Öffnung 12 kann auch durch ein Septum verschlossen sein, durch welches die Kanüle gesteckt werden kann. Im Gefäss befindet sich eine Flüssigkeit 13, welche einen Füllstand aufweist, welcher eine Phasengrenze 14 zwischen der Flüssigkeit 13 und der Umgebungsluft bildet.

Gleichzeitig mit dem Einsetzen der Bewegung der Dosiereinheit 2 wird durch die Pumpvorrichtung 9 Fluid durch die Kanüle 4 in den Entnahmebehälter 6 mit einem konstanten, vorbestimmten Volumenstrom eingesogen. Im ersten Schritt gemäss der Fig. 1 wird zunächst Umgebungsluft eingesogen. Der vom optischen Sensor 7 gemessene optische Paramater wird daher einen im Wesentlichen konstanten Wert aufweisen.

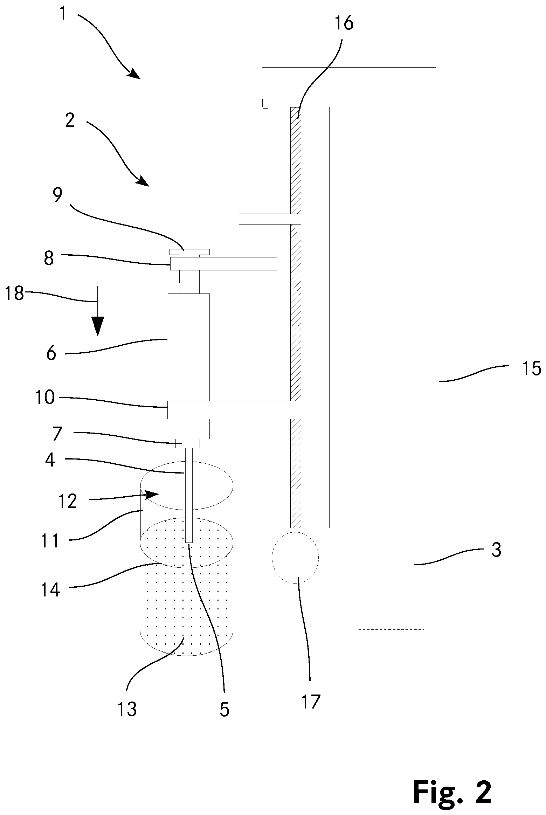

Die Fig. 2 zeigt die Dosiervorrichtung 1 an demjenigen Zeitpunkt im Verfahren, bei dem die Spitze 5 der Kanüle 4 in die Flüssigkeit 13 eintaucht beziehungsweise bei der die Phasengrenze 14 durch die Spitze 5 durchbrochen wird. Ab diesem Zeitpunkt wird demnach nicht mehr Umgebungsluft in die Kanüle angesogen, sondern die Flüssigkeit 13. Zu diesem Zeitpunkt befindet sich die Dosiereinheit an einer zweiten Position. Da sich der optische Sensor 7 jedoch zwischen der Kanüle 4 und dem Entnahmebehälter 6 befindet, detektiert der optische Sensor 7 noch keinen Phasenübergang. Erst nachdem das gesamte innerhalb der Kanüle 4 befindliche Volumen an Umgebungsluft in den Entnahmebehälter 6 gesogen wurde, wird die in die Kanüle 5 gesogene Flüssigkeit 13 den optischen Sensor 7 passieren. An diesem Zeitpunkt registriert der optische Sensor demnach den Phasenübergang.

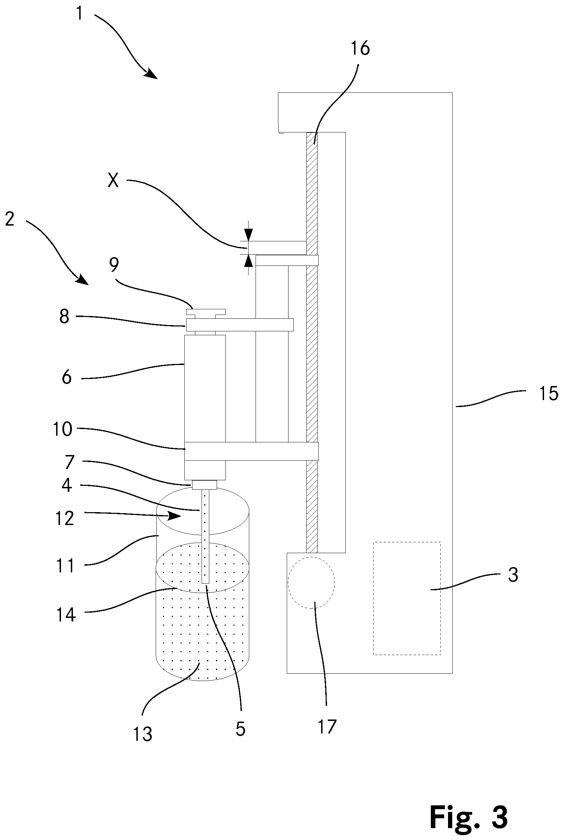

Diese Situation ist in der Fig. 3 dargestellt. Da die Dosiereinheit 2 während der Zeit, in welcher die noch innerhalb der Kanüle 4 befindliche Flüssigkeit 13 in den Entnahmebehälter 6 gesogen wird, nach wie vor mit der ersten Geschwindigkeit in die erste Richtung 18 bewegt wird, wird die Spitze 5 der Kanüle 4 bis zur Detektion des Phasenüberganges durch den optischen Sensor 7 tiefer in die Flüssigkeit 13 eindringen. Die Dosiereinheit 2 befindet sich zu diesem Zeitpunkt in der ersten Position. Im Vergleich zur zweiten Position, in welcher die Spitze 5 der Kanüle 4 die Phasengrenze 13 durchstossen hat, befindet sich die erste Position um eine Distanz X weiter in die erste Richtung. Um die zweite Position bestimmen zu können, berechnet die Steuerungseinheit 3 anhand des vorgegebenen Volumenflusses und dem definierten Volumen der Kanüle 4 die Zeit t, in welcher die Kanüle 4 vollständig mit der Flüssigkeit 13 gefüllt worden ist beziehungsweise in welcher die in der Kanüle verbleibende Umgebungsluft vollständig in den Entnahmebehälter 6 gesogen wurde. Anhand der vorbestimmten ersten Geschwindigkeit kann die Steuerungseinheit 3 anschliessend die Distanz X berechnen, welche die Dosiereinheit innerhalb der Zeit t zurückgelegt hat. Mit dieser Distanz X kann die Steuerungseinheit schlussendlich die zweite Position der Dosiereinheit 2 zu dem Zeitpunkt errechnen, an welchem die Spitze 5 der Kanüle 4 die Phasengrenze 13 durchbrochen hat.

**Patentansprüche**

1. Verfahren zum Betreiben einer Dosiervorrichtung (1) mit einer Steuerungseinheit (3) und einer Dosiereinheit (2), die eine Kanüle (4) mit einem ersten Volumen und einer Spitze (5) sowie einen mit der Kanüle (4) fluidisch verbundenen Entnahmebehälter (6) aufweist, umfassend die folgenden Schritte:

   a) lineares Bewegen der Dosiereinheit (2) in einer ersten Richtung (18) entlang einer Achse (A) mit einer vorbestimmten Geschwindigkeit, so dass die Kanüle (4) in ein Gefäss (11) mit wenigstens einer Flüssigkeit (13) hinein bewegt wird;
   b) konstantes Ansaugen von Fluid durch die Kanüle (4) mittels einer Pumpvorrichtung (9) mit einem vorbestimmten Volumenstrom;
   c) Messen mindestens eines optischen Parameters des angesogenen Fluids durch wenigstens einen optischen Sensor (7), der zwischen der Kanüle (4) und dem Entnahmebehälter (6) angeordnet ist;
   d) bei Detektion einer Veränderung des mindestens einen optischen Parameters Speicherung einer ersten Position der Dosiereinheit (2) auf der Achse (A) durch die Steuerungseinheit (3) und Unterbrechung der Bewegung der Dosiereinheit (2);
   e) Berechnung einer zweiten Position der Dosiereinheit (2) auf der Achse (A) durch die Steuerungseinheit (3), an welcher die Spitze (5) der Kanüle (4) eine erste Phasengrenze (14) durchbrochen hat, anhand der ersten Position, der vorbestimmten Geschwindigkeit, des ersten Volumens sowie des vorbestimmten Volumenstromes.

2. Verfahren gemäss Anspruch 1, **dadurch gekennzeichnet, dass** ein Benutzer an der Steuerungseinheit (3) die Art des Gefässes (11) aus einer Liste auswählt oder Parameter des Gefässes (11), insbesondere Volumen, Form und/oder Durchmesser eingibt.

3. Verfahren gemäss einem der Ansprüche 1 oder 2, **dadurch gekennzeichnet, dass** der wenigstens eine optische Sensor (7) den Brechungsindex, die Trübung und/oder die Transmission von Lichtstrahlen mindestens einer vorbestimmten Wellenlänge im Fluid misst, insbesondere von Lichtstrahlen im Infrarotbereich.

4. Verfahren gemäss einem der Ansprüche 2 bis 3, **dadurch gekennzeichnet, dass** vor dem Bewegen der Dosiereinheit (2) das Gefäss in eine Halterung der Dosiervorrichtung (1) eingelegt wird, welche derart angeordnet ist, dass ein oberer Rand des Gefässes (11) an einer definierten Grundposition relativ zur Achse (A) zu liegen kommt und Berechnung des im Gefäss (11) befindlichen Volumens an Flüssigkeit (13) durch die Steuerungseinheit (3) anhand der zweiten Position sowie des Typs oder der Parameter des Gefässes (11).

5. Verfahren gemäss einem der Ansprüche 1 bis 4, **dadurch gekennzeichnet, dass** die Dosiereinheit (2) entlang der Achse (A) in die erste Richtung (18) weiter mit der vorbestimmten Geschwindigkeit bewegt wird, bis der optische Sensor (7) erneut eine Veränderung des mindestens einen optischen Parameters detektiert, wobei die Bewegung unterbrochen wird und eine dritte Position der Dosiereinheit (2) auf der Achse (A) gespeichert wird, und wobei anhand der dritten Position, der vorbestimmten Geschwindigkeit, des ersten Volumens sowie des vorbestimmten Volumenstromes eine vierte Position entlang der Achse berechnet wird, an welcher die Spitze (5) der Kanüle (4) eine zweite Phasengrenze innerhalb der Flüssigkeit (13) durchstossen hat.

6. Verfahren gemäss einem der Ansprüche 2 bis 5, **dadurch gekennzeichnet, dass** die Dosiereinheit (2) in eine zweite Richtung, welche der ersten Richtung (18) entgegengesetzt ist, zurück bewegt wird, bis diese entlang der Achse (A) an einer Position liegt, welche entlang der Achse (A) um eine vordefinierte Distanz weiter in erster Richtung (18) liegt als die zweite Position oder als die vierte Position, wobei anschliessend die Pumpvorrichtung (9) mit einem vorbestimmten Volumenstrom Fluid durch die Kanüle (4) ansaugt und die Dosiereinheit (2) mit einer zweiten Geschwindigkeit in die erste Richtung (18) bewegt wird, welche durch die Steuerungseinheit (3) anhand des vorbestimmten Volumenstromes und der Art des Gefässes (11) oder der eingegebenen Parameter des Gefässes (11) derart berechnet wird, dass die Spitze (5) der Kanüle (4) konstant um die vordefinierte Distanz in die erste Richtung unterhalb der ersten Phasengrenze (13) beziehungsweise der zweiten Phasengrenze bleibt.

7. Verfahren gemäss Anspruch 5, **dadurch gekennzeichnet, dass** dieses ferner die folgenden Schritte umfasst:

a) Bewegung der Dosiereinheit (2) entlang der Achse (A) in eine zweite Richtung, welche der ersten Richtung (18) entgegengesetzt ist, um die Kanüle (4) aus dem Gefäss (11) zu entfernen;

b) Ausstossen der in der Kanüle (4) sowie dem Entnahmebehälter (6) befindlichen Flüssigkeit (13) in ein Ausgussgefäss, vorzugsweise gefolgt von einer Spülung des Entnahmebehälters (6) sowie der Kanüle (4) mit einer Spülflüssigkeit;

c) Bewegen der Dosiereinheit (2) in die erste Richtung (18), bis diese an einer Position liegt, welche entlang der Achse (A) um eine vordefinierte Distanz weiter in erster Richtung (18) liegt als die zweite Position, wobei anschliessend die Pumpvorrichtung (9) mit dem vorbestimmten Volumenstrom Fluid durch die Kanüle (4) ansaugt und die Dosiereinheit (2) mit einer zweiten Geschwindigkeit in die erste Richtung (18) bewegt wird, welche durch die Steuerungseinheit (3) anhand des vorbestimmten Volumenstromes und der Art des Gefässes (11) oder der eingegebenen Parameter des Gefässes (11) derart berechnet wird, dass die Spitze (5) der Kanüle (4) konstant um die vordefinierte Distanz in die erste Richtung (18) in der Flüssigkeit eingetaucht bleibt;

d) Unterbrechung des Verfahrens, wenn die Dosiereinheit (2) eine Position entlang der Achse (A) erreicht, welche um eine zweite vorbestimmte Distanz in der zweiten Richtung von der vierten Position entfernt liegt.

**8.** Dosiervorrichtung zur Durchführung eines Verfahrens gemäss einem der Ansprüche 1 bis 7, umfassend eine Steuerungseinheit (3) und eine Dosiereinheit (2), die eine Kanüle (4) mit einem ersten Volumen und einer Spitze (5) sowie einen mit der Kanüle fluidisch verbundenen Entnahmebehälter (6) aufweist sowie einem Antrieb (16, 17), mit welchem sich die Dosiereinheit (2) linear entlang einer Achse (A) bewegen lässt, und einer Pumpvorrichtung (9), mit welcher sich ein Fluid durch die Kanüle (4) in ein oder aus einem Gefäss (11) fördern lässt, sowie mindestens einen optischen Sensor (7), welcher zur Messung mindestens eines optischen Parameters eines durch die Kanüle (4) angesogenen Fluids ausgelegt ist, wobei der mindestens eine optischer Sensor (7) derart zwischen Kanüle (4) und Entnahmebehälter (6) angeordnet ist, dass der mindestens eine optische Sensor (7) unmittelbar an der Kanüle (4) anliegt, wodurch sich zwischen der Spitze (5) der Kanüle (4) und dem mindestens einen optischen Sensor (7) lediglich das erste Volumen der Kanüle (4) befindet, und wobei die Steuerungseinheit (3) derart ausgestaltet ist, dass diese anhand der ersten Position, des ersten Volumens, der vorbestimmten Geschwindigkeit sowie des vorbestimmten Volumenstroms die zweite Position, an welcher die Spitze (5) der Kanüle (4) die erste Phasengrenze (14) durchbrochen hat, berechnen kann.

**9.** Dosiervorrichtung gemäss Anspruch 8, **dadurch gekennzeichnet, dass** der mindestens eine optische Sensor (7) in einem Sensorgehäuse angeordnet ist, welches über Kupplungsvorrichtungen lösbar mit der Kanüle (4) sowie dem Entnahmebehälter (6) oder einer zum Entnahmebehälter (6) führenden Leitung verbindbar ist.

## Claims

**1.** Method for operating a dosing device (1) with a control unit (3) and a dosing unit (2), the latter having a cannula (4) with a first volume and a tip (5), and also a sampling container (6) fluidically connected to the cannula (4), said method comprising the following steps:

a) moving the dosing unit (2) linearly at a predetermined speed in a first direction (18) along an axis (A), such that the cannula (4) is moved into a vessel (11) containing at least one liquid (13);

b) aspirating fluid constantly through the cannula (4), with a predetermined volumetric flow, by a pump device (9);

c) measuring at least one optical parameter of the aspirated fluid using at least one optical sensor (7), which is arranged between the cannula (4) and the sampling container (6);

d) when a change of the at least one optical parameter is detected, using the control unit (3) to store a first position of the dosing unit (2) on the axis (A) and interrupting the movement of the dosing unit (2);

e) using the control unit (3) to calculate a second position of the dosing unit (2) on the axis (A), at which second position the tip (5) of the cannula (4) has penetrated a first phase boundary (14), on the basis of the first position, the predetermined speed, the first volume and the predetermined volumetric flow.

**2.** Method according to Claim 1, **characterized in that** a user selects the nature of the vessel (11) from a list using the control unit (3) or enters parameters of the vessel (11), in particular volume, shape and/or diameter.

**3.** Method according to either of Claims 1 and 2, **characterized in that** the at least one optical sensor (7) measures the refractive index, the turbidity and/or the transmission of light rays of at least one predetermined wavelength in the fluid, in particular light rays in the infrared range.

4. Method according to either of Claims 2 and 3, **characterized in that**, before the dosing unit (2) is moved, the vessel is placed in a holder of the dosing device (1) which is arranged in such a way that an upper edge of the vessel (11) comes to lie at a defined basic position relative to the axis (A), and calculation of the volume of liquid (13) located in the vessel (11) by the control unit (3) on the basis of the second position and of the nature or parameters of the vessel (11).

5. Method according to one of Claims 1 to 4, **characterized in that** the dosing unit (2) is moved further along the axis (A) in the first direction (18) at the predetermined speed until the optical sensor (7) again detects a change of the at least one optical parameter, wherein the movement is interrupted and a third position of the dosing unit (2) on the axis (A) is stored, and wherein a fourth position along the axis is calculated on the basis of the third position, the predetermined speed, the first volume and the predetermined volumetric flow, at which fourth position the tip (5) of the cannula (4) has penetrated a second phase boundary within the liquid (13).

6. Method according to one of Claims 2 to 5, **characterized in that** the dosing unit (2) is moved back in a second direction, which is counter to the first direction (18), until it lies along the axis (A) at a position which, along the axis (A), lies a predefined distance further in the first direction (18) than the second position or than the fourth position, wherein the pump device (9) then aspirates fluid with a predetermined volumetric flow through the cannula (4), and the dosing unit (2) is moved in the first direction (18) at a second speed which is calculated by the control unit (3) on the basis of the predetermined volumetric flow and the nature of the vessel (11) or of the input parameters of the vessel (11) in such a way that the tip (5) of the cannula (4) remains constantly, by the predefined distance in the first direction, below the first phase boundary (13) or the second phase boundary.

7. Method according to Claim 5, **characterized in that** it moreover comprises the following steps:

   a) moving the dosing unit (2) along the axis (A) in a second direction, which is counter to the first direction (18), in order to remove the cannula (4) from the vessel (11);
   b) ejecting the liquid (13) present in the cannula (4) and in the sampling container (6) into a pouring vessel, preferably followed by rinsing the sampling container (6) and the cannula (4) with a rinsing liquid;

   c) moving the dosing unit (2) in the first direction (18) until it lies at a position which, along the axis (A), lies a predefined distance further in the first direction (18) than the second position, wherein the pump device (9) then aspirates fluid with the predetermined volumetric flow through the cannula (4), and the dosing unit (2) is moved in the first direction (18) at a second speed which is calculated by the control unit (3), on the basis of the predetermined volumetric flow and the nature of the vessel (11) or of the input parameters of the vessel (11), in such a way that the tip (5) of the cannula (4) remains constantly immersed in the liquid by the predefined distance in the first direction (18);
   d) interrupting the method when the dosing unit (2) reaches a position along the axis (A) which lies away from the fourth position by a second predetermined distance in the second direction.

8. Dosing device for carrying out a method according to one of Claims 1 to 7, comprising a control unit (3) and a dosing unit (2), the latter having a cannula (4) with a first volume and a tip (5) and also a sampling container (6) connected fluidically to the cannula, and a drive (16, 17) with which the dosing unit (2) can be moved linearly along an axis (A), and a pump device (9) with which a fluid can be conveyed through the cannula (4) into or out of a vessel (11), and at least one optical sensor (7) which is designed to measure at least one optical parameter of a fluid aspirated through the cannula (4), wherein the at least one optical sensor (7) is arranged between cannula (4) and sampling container (6) in such a way that the at least one optical sensor (7) bears directly on the cannula (4), as a result of which only the first volume of the cannula (4) is present between the tip (5) of the cannula (4) and the at least one optical sensor (7), and wherein the control unit (3) is designed such that, on the basis of the first position, the first volume, the predetermined speed and the predetermined volumetric flow, it can calculate the second position at which the tip (5) of the cannula (4) has penetrated the first phase boundary (14).

9. Dosing device according to Claim 8, **characterized in that** the at least one optical sensor (7) is arranged in a sensor housing which, by way of coupling devices, can be connected releasably to the cannula (4) and to the sampling container (6) or to a line leading to the sampling container (6) .

**Revendications**

1. Procédé de fonctionnement d'un dispositif de dosage (1) doté d'une unité de commande (3) et d'une unité de dosage (2), laquelle comporte une canule (4) avec un premier volume et une pointe (5) ainsi qu'un réceptacle de prélèvement (6) relié fluidiquement à la canule (4), comprenant les étapes suivantes :

    a) mouvement linéaire de l'unité de dosage (2) dans une première direction (18) le long d'un axe (A) avec une vitesse prédéterminée, de sorte que la canule (4) est mue dans un récipient (11) avec au moins un liquide (13) ;
    b) aspiration constante de fluide par la canule (4) au moyen d'un dispositif de pompe (9) avec un débit volumique prédéterminé ;
    c) mesure d'au moins un paramètre optique du fluide aspiré par au moins un capteur optique (7), lequel est agencé entre la canule (4) et le réceptacle de prélèvement (6) ;
    d) lors d'une détection d'une variation de l'au moins un paramètre optique, mémorisation d'une première position de l'unité de dosage (2) sur l'axe (A) par l'unité de commande (3) et interruption du mouvement de l'unité de dosage (2) ;
    e) calcul d'une deuxième position de l'unité de dosage (2) sur l'axe (A) par l'unité de commande (3), à laquelle la pointe (5) de la canule (4) a traversé une première interface (14), à l'aide de la première position, de la vitesse prédéterminée, du premier volume ainsi que du débit volumique.

**2.** Procédé selon la revendication 1, **caractérisé en ce qu'**un utilisateur sélectionne le type du récipient (11) parmi une liste ou saisit un paramètre du récipient (11), en particulier le volume, la forme et/ou le diamètre, sur l'unité de commande (3).

**3.** Procédé selon l'une des revendications 1 et 2, **caractérisé en ce que** l'au moins un capteur optique (7) mesure l'indice de réfraction, la turbidité et/ou la transmittance de faisceaux lumineux d'au moins une longueur d'onde prédéterminée dans le fluide, en particulier de faisceaux lumineux dans le domaine infrarouge.

**4.** Procédé selon l'une des revendications 2 à 3, **caractérisé en ce qu'**avant le mouvement de l'unité de dosage (2) le récipient est déposé dans un support du dispositif doseur (1), agencé de telle sorte qu'un bord supérieur du récipient (11) vient reposer à une position de base définie relativement à l'axe (A) et calcul du volume de liquide (13) se trouvant dans le récipient (11) par l'unité de commande (3) à l'aide de la deuxième position ainsi que du type ou des paramètres du récipient (11) .

**5.** Procédé selon l'une des revendications 1 à 4, **caractérisé en ce que** l'unité de dosage (2) est mue plus avant le long de l'axe (A) dans la première direction (18) avec la vitesse prédéterminée jusqu'à ce que le capteur optique (7) détecte de nouveau une variation de l'au moins un paramètre optique, dans lequel le mouvement est interrompu et une troisième position de l'unité de dosage (2) sur l'axe (A) est mémorisée, et dans lequel à l'aide de la troisième position, de la vitesse prédéterminée, du premier volume ainsi que du débit volumique prédéterminé une quatrième position le long de l'axe est calculée, à laquelle la pointe (5) de la canule (4) a traversé une deuxième interface au sein du liquide (13) .

**6.** Procédé selon l'une des revendications 2 à 5, **caractérisé en ce que** l'unité de dosage (2) est mue en retour dans une deuxième direction, opposée à la première direction (18), jusqu'à ce qu'elle se trouve à une position le long de l'axe (A), laquelle est plus éloignée, d'une distance prédéfinie, que la deuxième position ou que la quatrième position dans la première direction (18) le long de l'axe (A), dans lequel le dispositif de pompe (9) aspire ensuite du fluide par la canule (4) avec un débit volumique prédéterminé et l'unité de dosage (2) est mue dans la première direction (18) avec une deuxième vitesse, laquelle est calculée par l'unité de commande (3) à l'aide du débit volumique prédéterminé et du type de récipient (11) ou des paramètres saisis pour le récipient (11) de sorte que la pointe (5) de la canule (4) reste constamment à la distance prédéfinie dans la première direction en dessous de la première interface (13) ou respectivement de la deuxième interface.

**7.** Procédé selon la revendication 5, **caractérisé en ce qu'**il comprend en outre les étapes suivantes :

    a) mouvement de l'unité de dosage (2) le long de l'axe (A) dans une deuxième direction, laquelle est opposée à la première direction (18), afin d'enlever la canule (4) du récipient (11) ;
    b) éjection dans un réceptacle de décharge du liquide (13) se trouvant dans la canule (4) ainsi que dans le réceptacle de prélèvement (6), de préférence suivie par un rinçage du réceptacle de prélèvement (6) ainsi que de la canule (4) avec un liquide de rinçage ;
    c) mouvement de l'unité de dosage (2) dans la première direction (18) jusqu'à une position, laquelle est plus éloignée, d'une distance prédéfinie, que la deuxième position dans la première direction (18) le long de l'axe (A),dans lequel le dispositif de pompe (9) aspire ensuite du fluide par la canule (4) avec le débit volumique prédéterminé et l'unité de dosage (2) est mue dans la première direction (18) avec une deuxième vitesse, laquelle est calculée par l'unité de commande (3) à l'aide du débit volumique prédéterminé et du type de récipient (11) ou des paramètres saisis pour le récipient (11) de sorte que la pointe (5) de la canule (4) reste constamment immergée dans le fluide à la distance prédéfinie dans la première direction (18) ;

d) interruption du procédé, lorsque l'unité de dosage (2) atteint une position le long de l'axe (A), laquelle est éloignée de la quatrième position d'une deuxième distance prédéterminée dans la deuxième direction.

8. Dispositif de dosage pour la mise en oeuvre d'un procédé selon l'une des revendications 1 à 7, comprenant une unité de commande (3) et une unité de dosage (2), laquelle comporte une canule (4) avec un premier volume et une pointe (5) ainsi qu'un réceptacle de prélèvement (6) relié fluidiquement à la canule ainsi qu'un entraînement (16, 17), avec lequel l'unité de dosage (2) peut être mue linéairement le long d'un axe (A) et un dispositif de pompe (9), avec lequel un fluide peut être déplacé par la canule (4) vers le récipient (11) ou hors du récipient, de même qu'au moins un capteur optique (7), lequel est agencé pour la mesure d'au moins un paramètre optique du fluide aspiré par la canule (4), dans lequel l'au moins un capteur optique (7) est arrangé entre la canule (4) et le réceptacle de prélèvement (6) de telle sorte que l'au moins un capteur optique (7) repose directement sur la canule (4), où entre la pointe (5) de la canule (4) et l'au moins un capteur optique (7) se trouve uniquement le premier volume de la canule (4), et dans lequel l'unité de commande (3) est conçue de telle sorte qu'elle peut calculer la deuxième position à laquelle la pointe (5) de la canule (4) traverse la première interface (14), à l'aide de la première position, du premier volume, de la vitesse prédéterminée ainsi que du débit volumique prédéterminé.

9. Dispositif de dosage selon la revendication 8, **caractérisé en ce que** l'au moins un capteur optique (7) est agencé dans un boîtier de capteur, lequel est, par le biais de dispositifs d'accouplement, raccordable de manière amovible à la canule (4) ainsi qu'au réceptacle de prélèvement (6) ou à une conduite menant au réceptacle de prélèvement (6).

**Fig. 1**

**Fig. 2**

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5919706 A
- DE 102007003040 B4
- EP 1756587 B1
- EP 2261676 B1